## Europäisches Patentamt
## European Patent Office
## Office européen des brevets

(19)

(11) Veröffentlichungsnummer: **0 043 570**
**B1**

(12)

# EUROPÄISCHE PATENTSCHRIFT

(45) Veröffentlichungstag der Patentschrift:
04.04.84

(21) Anmeldenummer: **81105180.4**

(22) Anmeldetag: **03.07.81**

(51) Int. Cl.³: **G 02 B 7/26**, G 02 B 5/16

(54) **Muffe für hochpaarige Lichtwellenleiter-Kabel.**

(30) Priorität: **07.07.80 DE 3025700**

(43) Veröffentlichungstag der Anmeldung:
**13.01.82 Patentblatt 82/2**

(45) Bekanntmachung des Hinweises auf die Patenterteilung:
**04.04.84 Patentblatt 84/14**

(84) Benannte Vertragsstaaten:
**AT BE CH FR GB IT LI NL SE**

(56) Entgegenhaltungen:
**DE - A - 2 721 300**
**DE - A - 2 735 106**
**DE - A - 2 914 217**
**DE - C - 2 621 852**

**Patents Abstracts of Japan Band 4, Nr. 103, 23 Juli 1980**
**Seite 113P20**
**Patents Abstracts of Japan Band 3, Nr. 64, 31 Mai 1979**
**Seite 59E114**
**Patents Abstracts of Japan Band 1, Nr. 94, 27 August**
**1977 Seite 2676E77**
**Patents Abstracts of Japan Band 4, Nr. 82, 13 Juni 1980**
**Seite 27P15**

(73) Patentinhaber: **SIEMENS AKTIENGESELLSCHAFT,**
**Berlin und München Wittelsbacherplatz 2,**
**D-8000 München 2 (DE)**

(72) Erfinder: **Gerber, Klaus, Urfer Weg 18 1/2,**
**D-8072 Manching (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Muffe für hochpaarige Lichtwellenleiter-Kabel

Die Erfindung betrifft eine Muffe für Lichtwellenleiter-Kabel zur Unterbringung von Lichtwellenleiter-Spleißen mit Anordnungen zur Festlegung von Lichtwellenleiter-Überlängen und mit Vorrichtungen zur Halterung der Lichtwellenleiter-Spleiße.

Für die Unterbringung von Lichtwellenleitern-Spleißen können im Prinzip die herkömmlichen Kabelmuffen für elektrische Kabel verwendet werden, doch sind bei der Unterbringung der Lichtwellenleiter-Spleiße zusätzliche Maßnahmen bezüglich der Festlegung der einzelnen Lichtwellenleiter-Adern erforderlich. So ist es zweckmäßig, für die Lichtwellenleiter besondere Vorrichtungen zu schaffen, mit denen auf die Eigenheiten der Lichtwellenleiter, zum Beispiel die Bruchgefährdung, besonders eingegangen wird. So wird in der DE-C-2 621 852 eine Vorrichtung zum Einlegen von Lichtwellenleiter-Überlängen durch Schleifenbildung der mittels Spleißelemente verbundenen Lichtwellenleiter innerhalb von Kabelmuffen beschrieben. Dabei wird eine Trägerplatte mit Kabelanfangsvorrichtung, mit einem Spleißkamm und mit Führungsvorrichtungen für die einzelnen Lichtwellenleiter-Adern verwendet. Hochpaarige Lichtwellenleiter-Kabel enthalten mehrere Bündel aus vielen Lichtwellenleiter-Adern, so daß die Unterbringung auf einer solchen Trägerplatte nicht mehr möglich ist, da die Übersichtlichkeit und die Zugänglichkeit zu den einzelnen Lichtwellenleiter-Adern verloren geht. So stellte sich für die vorliegende Erfindung die Aufgabe, diese Nachteile zu beseitigen, wobei besonders die Zugänglichkeit der Lichtwellenleiter-Adern, bzw. der Lichtwellenleiterspleiße zu berücksichtigen ist. Diese Aufgabe wird nun mit einer Muffe der eingangs angeführten Art dadurch gelöst, daß mehrere Einschubplatten für einzelne Lichtwellenleiter-Gruppen oder Lichtwellenleiter-Bündel von Lichtwellenleiter-Kabeln fächerförmig innerhalb des Muffengehäuses angeordnet sind, daß auf jeder Einführungsseite des Muffengehäuses ein Kamm für die Aufteilung und Fixierung der Lichtwellenleiterbündel angeordnet ist, wobei jeweils die Einkerbung des Kammes, in welcher ein Lichtwellenleiterbündel eingeklemmt ist, dem Standplatz der entsprechenden Einschubplatte entspricht, daß mehrere Führungsstifte für die Lichtwellenleiteradern auf jeder Einschubplatte angeordnet sind und daß Dichtungen an den Kabeleinführungen des Muffengehäuses angeordnet sind.

Ein großer Vorteil ist in der Erfindung darin zu sehen, daß der Spleißvorrat, das heißt genügende Überlängen der Lichtwellenleiter-Adern, in übersichtlicher Weise angeordnet werden kann und daß die einzelnen Spleiße gut zugänglich sind. Die Übersichtlichkeit wird dadurch erreicht, daß die einzelnen Bündel der hochpaarigen Lichtwellenleiter-Kabel bündelweise getrennt auf Einschubplatten angeordnet werden, die je nach Bedarf einzeln gezogen werden können. Hierzu sind die erforderlichen Überlängen von Lichtwellenleiter-Adern auf einer solchen Einschubplatte durch Halterungen in ihrer Lage gesichert, gewähren jedoch bei Bedarf die erforderliche Freizügigkeit, da durch die Überlängen das Herausnehmen einer Einschubplatte möglich wird. Die Überlängen sind so gewählt, daß auch nachträgliche Umspleißungen möglich sind. Die einzelnen Lichtwellenleiter-Bündel eines Lichtwellenleiter-Kabels werden an jeder Einführungsseite der Muffe in einem Kamm fixiert, wobei die Einkerbungen, in welche die Bündel eingesetzt werden, dem Standplatz der entsprechenden Einschubplatte entsprechen. So kann eine gute Übersichtlichkeit erreicht werden und die Anordnung der übrigen Lichtwellenleiter-Bündel bleibt beim Ziehen einer Einschubplatte erhalten. Die Anzahl der Einschubplatten und die Aufnahmefähigkeit der als Magazin angeordneten Klemmelemente sind den jeweils zu verbindenden Kabeln anpaßbar.

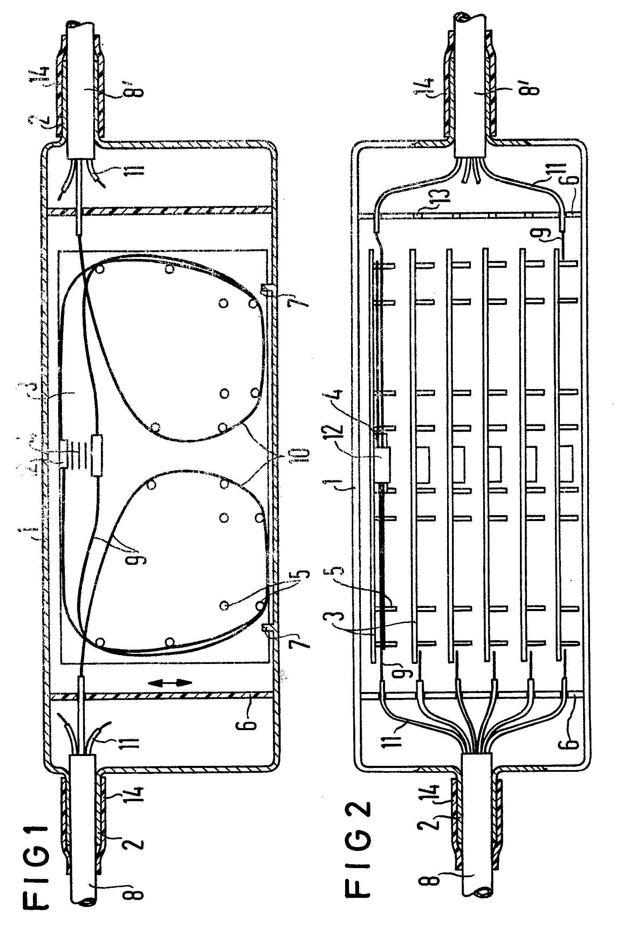

Die Erfindung wird nun anhand von zwei Figuren näher erläutert, wobei in Figur 1 ein Querschnitt und in Figur 2 eine Ansicht von oben in die Muffe gezeigt wird.

In Figur 1 ist das Muffengehäuse 1 in geschnittener Form dargestellt, um die Anordnung der Lichtwellenleiter-Adern 9, von denen ersatzweise nur zwei gezeichnet sind, auf einer Einschubplatte 3 zu zeigen. Die zu verbindenden Lichtwellenleiter-Kabel 8 und 8' sind durch die Kabeleinführungen 2 in das Muffengehäuse 1 eingeführt, wobei die Abdichtung in diesem Falle durch Schrumpfabdichtungen mit auf die Kabel 8 bzw. 8' und die Kabeleinführungen 2 schrumpfbaren Schläuchen gebildet werden. Nach den Kabeleinführungen 2 werden die einzelnen Bündel 11 der Lichtwellenleiter-Kabel 8 bzw. 8' getrennt auf Einschubplatten 3 geführt und dort separat gespleißt. Zur Führung der einzelnen Lichtwellenleiter-Adern 9 sind auf den Einschubplatten 3 Führungsstifte 5 angeordnet, um welche die Lichtwellenleiter-Adern 9 in Schleifen 10 so geführt werden, daß der minimal zulässige Biegeradius der Lichtwellenleiter-Adern 9 nicht unterschritten wird. Diese Führungsstifte 5 können an ihren Enden verbreitert oder gekröpft ausgebildet sein, damit ein Ausgleiten der Lichtwellenleiter-Adern 9 nicht so leicht erfolgen kann. Jeder ausgeführte Lichtwellenleiter-Spleiß 12 wird schließlich in einem Klemmelement 4 gehalten. Diese Klemmelemente 4 sind zweckmäßigerweise in der Art eines Magazins untereinander angeordnet, so daß eine gute Übersicht und Kennzeichnung der einzelnen Fächer möglich ist. Jede Einschubplatte 3 wird mit Hilfe von Einschubhaltern 7 innerhalb des Muffengehäuses 1 in seiner Position fixiert, so daß eine Einschubplatte 3 hinter der anderen festgelegt werden kann. Die Aufteilung der Lichtwellenleiter-Bündel 11 erfolgt jeweils nach der Kabeleinführung 2 in einem sogenannten Kamm 6. Auf diese Weise ist eine einfache Zuordnung der Lichtwellenleiter-Bündel 11 zu den Einschubplatten 3 gegeben, die auch bei Herausnahme einer Einschubplatte 3 aus dem Verband bestehen bleibt. Die Einschubrichtung der einzelnen Einschubplatten 3 ist in der Figur 1 durch einen Doppelpfeil angedeutet, so daß jede Einschubplatte 3 für sich nach der Abnahme des Muffendeckels, der zeichnerisch nicht hervorgehoben ist, nach oben herausgezogen werden kann.

Figur 2 zeigt nun das Muffengehäuse 1 bei abgenommenem Deckel, so daß die Anordnung der hintereinander liegenden Einschubplatten 3 deutlich wird. Daraus ist auch gut ersichtlich, daß diese Einschubplatten 3 unabhängig voneinander heraus- und hineingeschoben werden können, da auf ihnen jeweils nur ein Lichtwellenleiter-Bündel 11, das in der Position der entsprechenden Einschubplatte 3 im Kamm 6 fixiert ist, gespleißt wird. Weiterhin sind die von den Einschubplatten 3 abstehenden Führungsstifte 5 für das Einlegen und Fixieren der einzelnen Lichtwellenleiter-Adern 9 erkennbar, durch die die Schleifen 10 festgelegt werden. In der Mitte der Einschubplatten 3 sind die Lichtwellenleiter-Spleiße 12 angeordnet, die ihrerseits in Klemmelementen 4 eingesetzt sind. Zur Herstellung der Lichtwellenleiter-Spleiße 12 können die üblichen Spleißverfahren herangezogen werden. Der Kamm 6 weist, wie aus der rechten Einführungsseite hervorgeht, Einkerbungen 13 auf, in welchen die Lichtwellenleiter-Bündel 11 in geordneter Weise eingeklemmt sind. Rechts und links sind am Muffengehäuse 1 die Kabeleinführungen 2 angesetzt, die hier mit Hilfe von schrumpfbaren Schläuchen 14 und unter Umständen mit entsprechenden Dichtungsmitteln die Abdichtung zwischen dem Lichtwellenleiter-Kabel 8 bzw. 8′ und den Kabeleinführungen 2 herstellen. Diese Abdichtungen können jedoch auch in anderer Form, zum Beispiel als Preßstopfendichtungen oder als Klemmdichtungen ausgebildet werden.

## Patentansprüche

1. Muffe für Lichtwellenleiterkabel zur Unterbringung von Lichtwellenleiterspleißen mit Anordnungen zur Festlegung von Lichtwellenleiterüberlängen und mit Vorrichtungen zur Halterung der Lichtwellenleiterspleiße, dadurch gekennzeichnet, daß mehrere Einschubplatten (3) für einzelne Lichtwellenleitergruppen oder Lichtwellenleiterbündel (11) von Lichtwellenleiterkabeln (8, 8′) fächerförmig innerhalb des Muffengehäuses (1) angeordnet sind, daß auf jeder Einführungsseite des Muffengehäuses (1) ein Kamm (6) für die Aufteilung und Fixierung der Lichtwellenleiterbündel (11) angeordnet ist, wobei jeweils die Einkerbung (13) des Kammes (6), in welcher ein Lichtwellenleiterbündel (11) eingeklemmt ist, dem Standplatz der entsprechenden Einschubplatte (3) entspricht, daß mehrere Führungsstifte (5) für die Lichtwellenleiteradern nund daß Dichtungen (14) an den Kabeleinführungen (2) des Muffengehäuses (1) angeordnet sind.

2. Muffe nach Anspruch 1, dadurch gekennzeichnet, daß schrumpfbare Schläuche (14) als Dichtungen an den Kabeleinführungen (2) angeordnet sind.

3. Muffe nach Anspruch 1, dadurch gekennzeichnet, daß Preßstopfendichtungen in den Kabeleinführungen (2) angeordnet sind.

## Claims

1. A sleeve for light waveguide cables to accommodate light waveguide splices, comprises arrangements for fixing surface lengths of light waveguide, and means for holding the light waveguide splices, characterised in that a plurality of plug-in plates (3) for individual light waveguide groups or bunches (11) of light waveguide cables (8, 8′) is arranged in fanshaped manner in the sleeve housing (1); that at each input side of the sleeve housing (1), there is arranged a comb (6) which serves to distribute and secure the light waveguide bunches (11), the notch (13) of the comb (6) in which a light waveguide bunch (11) is clamped, corresponding to the location of the corresponding plug-in plate (3); that a plurality of guide pins (5) for the light waveguide strands (9) are arranged on each plug-in plate (3); and that seals (14) are arranged on the cable inlets (2) of the sleeve housing (1).

2. A sleeve according to Claim 1, characterised in that as seals, shrinkable tubes (14) are arranged on the cable inlets (2).

3. A sleeve according to Claim 1, characterised in that plastics seals are arranged in the cable inlets (2).

## Revendications

1. Boîte de jonction pour des câbles à guides d'ondes de lumière en vue d'y loger des épissures de guides d'ondes de lumière avec des dispositifs pour fixer des surlongueurs de guides d'ondes de lumière et avec des dispositifs pour supporter des épissures des guides d'ondes de lumière, caractérisée par le fait que plusieurs plaques d'insertion (3) pour des groupes individuels de guides d'ondes de lumière ou de faisceaux de guides d'ondes de lumière (11) de câbles à guides d'ondes de lumière (8, 8′) sont disposées en éventail dans la boîte de jonction (1), que sur chaque côté d'introduction de la boîte de jonction (1) est disposé un peigne (6) pour la répartition et la fixation des faisceaux de guides d'ondes de lumière (11), l'entaille (13) du peigne (6) dans laquelle est coincé un faisceau de guides d'ondes de lumière (11) correspondant à l'emplacement de la plaque d'insertion correspondante (3), que plusieurs chevilles de guidage (5) sont disposées pour les brins de guides d'ondes de lumière (9) sur chaque plaque d'insertion (3), et que des moyens d'étanchéité (14) sont prévus aux entrées de câbles (2) de la boîte de jonction (1).

2. Boîte de jonction selon la revendication 1, caractérisée par le fait que des tuyaux souples rétractables (14) sont disposés comme moyens d'étanchéité au niveau des entrées de câble (2).

3. Boîte de jonction selon la revendication 1, caractérisée par le fait que des moyens d'étanchéité en forme de presse-étoupes sont disposés dans les entrées de câble (2).

FIG 1

FIG 2